# EUROPÄISCHE PATENTSCHRIFT

(11) **EP 2 666 597 B1**
(45) Veröffentlichungstag und Bekanntmachung des Hinweises auf die Patenterteilung: **17.04.2019**
(21) Anmeldenummer: 13166785.9
(22) Anmeldetag: 07.05.2013
(51) Int. Cl.: B25J 9/10

(54) **Industrieroboter mit einem ringförmigen Schleppanschlag**
Industrial robot with a ring-shaped trailing stop
Robot industriel doté d'une butée d'entraînement annulaire

(30) Priorität: 21.05.2012 DE 102012208430
(43) Veröffentlichungstag der Anmeldung: 27.11.2013
(73) Patentinhaber: KUKA Deutschland GmbH, 86165 Augsburg (DE)
(72) Erfinder: Krumbacher, Rainer, 87675 Rettenbach (DE); Liebl, Franz, 86551 Aichach (DE); Groll, Christoph, 86169 Augsburg (DE)
(74) Vertreter: Ege Lee & Partner Patentanwälte PartGmbB

(56) Entgegenhaltungen:
- DE-U1- 29 616 401
- JP-A- H0 320 114
- US-A- 3 469 494
- US-A1- 2010 278 623

## Beschreibung

Die Erfindung betrifft einen Industrieroboter, aufweisend einen Roboterarm, der mehrere über Gelenke verbundene Glieder aufweist, von denen wenigstens zwei benachbarte Glieder durch jeweils ein Gelenk verbunden sind, das als Drehgelenk ausgebildet, mittels eines Antriebs verstellbar und in seinem maximalen Drehverstellwinkel durch eine mechanische Anschlagsvorrichtung begrenzt ist.

Industrieroboter sind Arbeitsmaschinen, die zur automatischen Handhabung und/ oder Bearbeitung von Objekten mit Werkzeugen ausgerüstet werden können und mittels ihrer Gelenke in mehreren Bewegungsachsen beispielsweise hinsichtlich Orientierung, Position und Arbeitsablauf programmierbar sind. Industrieroboter weisen üblicherweise einen Roboterarm mit mehreren durch insbesondere elektrische Antriebe automatisch oder manuell verstellbare Gelenke (Achsen) und eine programmierbare Steuerung (Steuervorrichtung) auf, die während des Betriebs die Bewegungsabläufe des Industrieroboters steuert bzw. regelt.

Roboterarme umfassen unter Anderem ein Gestell und ein relativ zum Gestell bezüglich einer Drehachse drehbar gelagertes Karussell, an dem eine Schwinge gelagert ist, an der ihrerseits ein Roboterarmausleger mit einer Roboterhand gelagert ist, bei der Roboterarmausleger und/oder Roboterhand mehrere Gelenke aufweisen können. Je nach konstruktiver Ausführung des Roboterarms können die möglichen Drehbewegungen eines oder mehrerer Gelenke bzw. Roboterachsen mittels Festanschlägen mechanisch auf weniger als 360° begrenzt werden oder mittels Schleppanschlägen mechanisch auf mehr als 360°, beispielsweise auf 380° bis 420°, insbesondere 400° begrenzt werden.

Um eine Drehbewegung des Karussells relativ zum Gestell von mehr als 360° zu ermöglichen, offenbart die DE 296 16 401 U1 einen Industrieroboter, dessen Gestell eine konzentrisch zur Drehachse angeordnete teilkreisförmige Kulisse aufweist, in der ein Schleppanschlag gleitend gelagert ist. Am Karussell ist ein Mitnehmer angeordnet, der in der einen Drehrichtung des Karussells beim Erreichen der Kulisse mit der einen Seite des Schleppanschlags, und in der Gegenrichtung mit der gegenüberliegenden Seite zusammenwirkt und den Schleppanschlag jeweils bis zum Anschlag an dem gegenüberliegenden geschlossenen Ende der Kulisse mitführt. Der Schleppanschlag kann allseitig oder auch nur an den durch Reibung und Stoß beanspruchten Stellen mit einem dämpfenden Belag z.B. in Form von aufvulkanisiertem Gummi versehen. Damit der Schleppanschlag nicht verkippt, sondern über seine Gleitfläche sauber geführt wird, muss der Schleppanschlag eine gewisse Breite aufweisen.

Aus der DE 10 2009 043 404 A1 ist ein Industrieroboter bekannt, aufweisend einen mehrachsigen Roboterarm mit einem Gestell, einem relativ zum Gestell bezüglich einer Achse drehbar gelagerten Karussell und einer zum Begrenzen einer Drehbewegung des Karussells relativ zum Gestell vorgesehenen mechanischen Anschlagvorrichtung, die eine am Gestell angeordnete Kulisse mit an ihren Enden angeordneten Anschlägen, einen in der Kulisse angeordneten Schleppanschlag und einen am Karussell angeordneten Mitnehmer aufweist, wobei der Mitnehmer und die Kulisse derart ausgebildet sind, dass der Mitnehmer bei einer entsprechenden Drehbewegung des Karussells bezüglich der Achse in die Kulisse eingeführt wird und den Schleppanschlag gegen den relevanten Anschlag stößt, und der Schleppanschlag ein plastisch verformbares Dämpfungselement umfasst, das vorgesehen ist, aufgrund einer plastischen Verformung, hervorgerufen durch ein Stoßen des Schleppanschlags gegen den relevanten Anschlag durch den Mitnehmer das Karussell zu bremsen.

Aufgabe der Erfindung ist es, einen verbesserten Industrieroboter mit einer mechanischen Anschlagsvorrichtung anzugeben. Insbesondere ist es Aufgabe der Erfindung, einen Industrieroboter mit einer verbesserten mechanischen Schleppanschlagsvorrichtung zu schaffen, die vollständig innerhalb eines Gehäusebauteils Platz findet und insbesondere raumsparend ausgeführt ist.

Die Aufgabe der Erfindung wird gelöst durch einen Industrieroboter, aufweisend einen Roboterarm, der mehrere über Gelenke verbundene Glieder aufweist, von denen wenigstens zwei benachbarte Glieder durch jeweils ein Gelenk verbunden sind, das als Drehgelenk ausgebildet, mittels eines Antriebs verstellbar und in seinem maximalen Drehverstellwinkel durch eine mechanische Anschlagsvorrichtung begrenzt ist, die eine mit dem einen der beiden benachbarten Glieder verbundene Anschlagsvorrichtung, einen mit dem anderen der beiden benachbarten Glieder verbundenen Mitnehmer und einen von dem Mitnehmer verstellbaren Schleppanschlag umfasst, der einen Schleppanschlagkörper und einen mit dem Schleppanschlagkörper verbundenen Ringkörper aufweist, welcher zumindest teilweise oder vollständig in eine Ringnut in einer Innenwand eines Gehäusebauteils des einen der beiden benachbarten Glieder drehbar eingesetzt ist.

Der Industrieroboter weist den Roboterarm und eine programmierbare Steuerung (Steuervorrichtung) auf, die während des Betriebs die Bewegungsabläufe des Industrieroboters steuert bzw. regelt, dadurch, dass ein oder mehrere automatisch oder manuell verstellbare Gelenke (Roboterachsen) durch insbesondere elektrische Antriebe bewegt werden, in dem die Steuerung die Antriebe steuert bzw. regelt.

Der maximale Drehverstellwinkel eines beispielhaften Drehgelenks kann dabei dadurch begrenzt werden, dass in den jeweiligen Endwinkelstellungen der Mitnehmer den verstellbaren Schleppanschlag gegen die Anschlagsvorrichtung treibt und dort derart mechanisch anschlägt, dass es zumindest zu einem signifikanten Stromanstieg an dem betreffenden Antrieb kommt und die Steuerung aufgrund eines solchen Stromanstiegs den Antrieb anhält, so dass das betreffende Gelenk gesteuert bzw. geregelt zum Stillstand kommt. In speziellen Fällen kann eine erfindungsgemäße Anschlagsvorrichtung aber auch ausgebildet sein, das betreffende Gelenk allein durch das mechanisch Anschlagen zum Stillstand zu setzen, unabhängig davon, in wie weit der jeweilige Antrieb von der Steuerung gesteuert bzw. geregelt ist.

Die erfindungsgemäße Anschlagsvorrichtung kann eine Überfahrsicherung, insbesondere an der Armauslegerache, beispielsweise die vierte von sechs Roboterachsen, mit beispielsweise einem maximalen Drehverstellwinkel zwischen plus 185° und minus 185° bilden. Diese Überfahrsicherung kann beispielsweise bei der Handfahrt, d.h. bei einem manuell angesteuertem elektromotorischen Verfahren der Gelenke, insbesondere während einer Justage des Industrieroboters das Einhalten der maximalen Drehverstellwinkel sicherstellen.

Mit einer erfindungsgemäßen Anschlagvorrichtung kann eine solche Überfahrsicherung in einem minimalen Bauraum realisiert werden. Innerhalb diesen Bauraums kann auch ein Sensor, insbesondere ein Justageaufnehmer Platz finden. In speziellen Ausführungsformen ist es nicht erforderlich, eine Robustheit eines vollständig mechanisch wirkenden Schleppanschlags zu erreichen, die in einem Störungsfall benötigt wird. Eine massivere Ausführung ist jedoch möglich, so dass diese Variante auch als Schleppanschlag ausgeführt werden kann.

Erfindungsgemäß wird der Schleppanschlag, d.h. die Überfahrsicherung als ein Ringkörper ausgeführt, welcher zumindest teilweise oder vollständig in eine Ringnut in einer Innenwand eines Gehäusebauteils des einen der beiden benachbarten Glieder drehbar eingesetzt ist. Der Ringkörper kann ähnlich eines Sicherungsrings (DIN 472) in eine Nut im Gussteil montiert werden und liegt somit im Inneren des Roboterarms. Somit sind für die Installation der Überfahrsicherung keine weiteren Komponenten nötig und die Störkontur wird nicht verändert, d.h. verschlechtert.

Der Schleppanschlag bzw. die Überfahrsicherung kann eine exzentrische Innen- und Außenkontur besitzen, welche so ausgelegt ist, dass der Ringkörper beim Montieren eine kreisförmige Außenkontur behält um eine bessere Montage sicherzustellen. Des Weiteren kann eine Nase am Ringkörper mit einer schlüssellochartigen Öffnung versehen sein, um eine Federwirkung bei der Fahrt in die Endlage zu erzeugen.

Zur Begrenzung des Achswinkels, d.h. zur Begrenzung des maximalen Drehverstellwinkel können beispielsweise Zylinderstifte gesetzt werden. Damit ist es möglich die Überfahrsicherung auf bis zu ca. plus 320° und minus 320° zu erweitern. Bei einer Ausführung als Anschlag können zusätzliche Pufferelemente vorgesehen werden. Bei einem Achswinkel von beispielsweise ca. plus 200° und minus 200° kann außerdem ein Justageaufnehmer in der gleichen Ebene realisiert werden, in welcher auch der Ringkörper liegt. Damit kann die axiale Baulänge des betreffenden Gehäusebauteils minimiert werden.

Der erfindungsgemäße Ringkörper ist also im Inneren des Gehäusebauteils drehbar gelagert. Insbesondere ist der Ringkörper dadurch axial im Gehäusebauteil fixiert und in Umfangsrichtung drehbar geführt. Der Ringkörper bildet insoweit eine Drehlagervorrichtung, durch welche der Schleppanschlag drehbar gelagert ist. Der Schleppanschlag bzw. der Schleppanschlagkörper ist insoweit mit dem Ringkörper verbunden.

Der Ringkörper kann durch einen federelastischen offenen Ringbogen gebildet werden, der zwei gegenüberliegende Ringbogenenden aufweist und der ausgebildet ist, durch ein federelastisch vorspannendes Aufeinanderzubewegen der Ringbogenenden in seinem Außendurchmesser derart verkleinert zu werden, dass der Ringkörper in die Ringnut des Gehäusebauteils einsetzbar und/oder entnehmbar ist und in einem federelastisch zumindest teilweise oder vollständig entspanntem Zustand der Ringkörper in der Ringnut des Gehäusebauteils axial fixiert und in Umfangsrichtung drehbar geführt ist. Der Schleppanschlag, insbesondere der Schleppanschlagkörper kann mittels des Ringkörpers drehbar im Inneren des Gehäusebauteils auf einfach Weise montiert werden. Auch wird aufgrund der besonders flachen und schmalen Bauweise in Form eines Ringes nur wenig Bauraum im Inneren des Gehäusebauteils benötigt, um die Schleppanschlagsvorrichtung zu realisieren. Der Ringkörper kann beispielsweise durch einen aus einem Blechhalbzeug ausgestanzten Blechteil aus Federstahl hergestellt werden. Alternativ kann der Ringkörper beispielsweise auch durch Laserschneiden aus einem Blechhalbzeug hergestellt werden.

Indem der Ringkörper einen federelastischen offenen Ringbogen bildet, der zwei gegenüberliegende Ringbogenenden aufweist, kann der Ringkörper in analoger Weise zu einem dem Fachmann als solches zu Montagezwecken bekannten Sicherungsring, insbesondere in Art eines Sicherungsringes gemäß DIN 472 ausgebildet sein und montiert werden. Darüber hinaus kann ein solcher Ringkörper in seiner axialen Erstreckung sehr flach ausgeführt sein, so dass nur ein geringer Platzbedarf zur Realisierung der Schleppanschlagvorrichtung innerhalb des Gehäusebauteils notwendig ist.

Die beiden Ringbogenenden können jeweils einen Vorsprung oder ein Auge aufweisen, das ausgebildet ist, jeweils eine manuelle Greifwerkzeugspitze eines zum Aufeinanderzubewegen der Ringbogenenden ausgebildeten Greifwerkzeugs aufzunehmen. Ein solcher Vorsprung oder ein solches Auge kann in analoger Weise zu einem Vorsprung oder Auge, wie es dem Fachmann als solches von Sicherungsringen, insbesondere in Art eines Sicherungsringes gemäß DIN 472 bekannt ist, ausgeführt sein.

Der Schleppanschlagkörper kann von einer sich vom Ringkörper radial nach innen erstreckenden Lasche, insbesondere einer einteilig mit dem Ringkörper ausgebildeten Lasche gebildet werden. Der Schleppanschlagkörper weist dabei zwei gegenüberliegende Anschlagflächen auf, welche jeweils je nach Anschlaglage an einem von zwei Gegenanschlagsflächen der Anschlagsvorrichtung in der jeweiligen maximalen Drehwinkellage des Gelenks anstehen.

Die Lasche kann zwei voneinander sich radial ersteckende Stege aufweisen, die eine in der Lasche ausgebildete Ausnehmung begrenzen. Aus der Abstimmung der Breite der Lasche bzw. des Abstands der Stege voneinander an dem Schleppanschlagkörper bzw. der Überfahrsicherung und dem Winkel zwischen beispielsweise zweier Schrauben, Bolzen oder Zapfen der Anschlagsvorrichtung ergibt sich der zu begrenzende Winkelbereich des Schleppanschlags. Durch die Ausnehmung wird der Lasche bzw. den beiden Stegen ein gewisse Elastizität aufgeprägt, durch die während des Aufeinandertreffen von Schleppanschlagkörper und Anschlagsvorrichtung eine gewisse Dämpfung des Aufschlags erreicht wird.

Jeder Steg kann einen im Querschnitt gegenüber einem radial auskragenden Stegabschnitt des Stegs verkleinerten Basisabschnitt des Stegs aufweisen, der ausgebildet ist, den radial auskragenden Stegabschnitt federelastisch an dem Ringkörper anzubinden. Indem jeder Steg einen im Querschnitt gegenüber einem radial auskragenden Stegabschnitt des Stegs verkleinerten Basisabschnitt des Stegs aufweist, können die dämpfenden Eigenschaften über die Ausnehmung hinaus zusätzlich erhöht werden.

Generell kann der Anschlagsvorsprung von zwei in einem Winkel und insbesondere auf demselben radialen Abstand vom Drehzentrum des Gelenks angeordneten Vorsprüngen, insbesondere Schrauben, Stiften, Bolzen oder Zapfen gebildet werden, zwischen denen der Schleppanschlagkörper in seiner in die Ringnut des Gehäusebauteils eingesetzten Lagerungsposition um den Winkel, insbesondere einem Winkel von 40 bis 80 Winkelgrad, insbesondere 60 Winkelgrad drehbeweglich ist. Die zwei Vorsprünge, insbesondere Schrauben, Bolzen oder Zapfen begrenzen folglich den Schwenkwinkel, um den der Schleppanschlag, insbesondere der Schleppanschlagkörper drehbeweglich in der Nut des Gehäusebauteils gelagert ist. Es können zwei oder mehrere Aufnahmen, insbesondere Bohrungen oder Gewindebohrungen in dem Gehäusebauteil vorgesehen sein, wobei in jede Aufnahmen bzw. Bohrung oder Gewindebohrung ein Vorsprünge, Bolzen oder Zapfen lösbar einsetzbar ist. Dabei kann durch Herausnehmen bzw. Herausschrauben einer oder mehrerer der Vorsprünge, Schrauben, Bolzen oder Zapfen die Winkelspanne, innerhalb welcher der Schleppanschlag, insbesondere der Schleppanschlagkörper drehbeweglich ist, verändert werden. Es können auch beispielsweise nur zwei Vorsprünge, Schrauben, Bolzen oder Zapfen vorgesehen sein, die wahlweise in zwei von mehreren, insbesondere gleichmäßig über einen Umfang verteilt angeordneten Aufnahmen, insbesondere Bohrungen oder Gewindebohrungen eingesetzt und wieder entnommen werden können, um die Winkelspanne je nach gewünschtem maximalen Drehverstellwinkel entsprechend zu verändern.

In dem Gehäusebauteil des einen der beiden benachbarten Glieder kann eine Aufnahmebohrung für einen radial in das Innere des Gehäusebauteils hineinragenden Justageaufnehmer eingebracht sein und der Ringkörper des Schleppanschlags kann derart in die Ringnut des Gehäusebauteils eingesetzt sein, dass in jeder Drehlage des Schleppanschlags, insbesondere des Ringkörpers die Aufnahmebohrung bzw. der Justageaufnehmer in dem vom Ringbogen offenen Sektor des Ringkörpers zwischen den beiden Ringbogenenden liegt. Die Aufnahmebohrung für einen radial in das Innere des Gehäusebauteils hineinragenden Justageaufnehmer kann also dort gesetzt werden, wo die Innenwand des Gehäusebauteils gerade nicht von dem Ringkörper belegt wird, und zwar in jeder der vom Ringkörper durch die Anschlagsvorrichtung festgelegten einnehmbaren Drehlagen. Eine solche Öffnung des Anschlags dient in einer solchen Ausführungsform als Freimachung für den Justageaufnehmer, insbesondere einer Justagepatrone, die in das Gehäuse hineinragt. Diese wird an die Bewegung der Überfahrsicherung zwischen den Schrauben angepasst, um sicher zu stellen, dass im Betrieb die Justagepatrone nicht beschädigt wird.

In allen Ausführungsformen kann der Mitnehmer von einem Vorsprung, insbesondere Schraube, Bolzen oder Zapfen gebildet werden, der in Abhängigkeit der Drehrichtung des anderen der beiden benachbarten Glieder entweder an der einen Seite des verstellbaren Schleppanschlags, insbesondere an dem einen Steg oder an der anderen Seite des verstellbaren Schleppanschlags, insbesondere an dem anderen Steg anzuschlagen vermag, um den Schleppanschlag in der Ringnut des Gehäusebauteils zu verdrehen. Bei einer Drehung des betreffenden Gliedes fährt der Mitnehmer also zunächst frei auf einer Kreisbahn um die Drehachse des Gliedes drehend um, bis der Mitnehmer an dem Schleppanschlag bzw. an dem Schleppanschlagskörper ansteht, diesen um die Winkelspanne, innerhalb welcher der Schleppanschlag, insbesondere der Schleppanschlagkörper drehbeweglich ist, vor sich herschiebt, bis er an der Anschlagsvorrichtung fest ansteht, wenn der maximale Drehverstellwinkel des Gelenks erreicht ist.

In allen Ausführungsformen kann der Schleppanschlag, insbesondere der Ringkörper in Art eines Sicherungsringes, insbesondere in Art eines Sicherungsringes gemäß DIN 472 ausgeführt sein. In einer solchen Ausführungsform kann der Schleppanschlag, d.h. die Überfahrsicherung in einem Gelenk des Roboterarms verbaut sein. Die Überfahrsicherung kann in Form eines Sicherungsrings ausgeführt und mit Hilfe einer Sicherungsring-Montage-Zange in die Nut im Gehäusebauteil eingesetzt werden.

Ein Ausführungsbeispiel der Erfindung ist exemplarisch in den beigefügten schematischen Zeichnungen dargestellt. Es zeigen:
- Fig. 1: eine perspektivische Ansicht eines Industrieroboters mit einem erfindungsgemäßen Schleppanschlag, und
- Fig. 2: eine axiale Draufsicht auf ein geöffnetes Gehäusebauteil mit eingesetztem Ringkörper, mit einer Anschlagsvorrichtung und einem Mitnehmer.

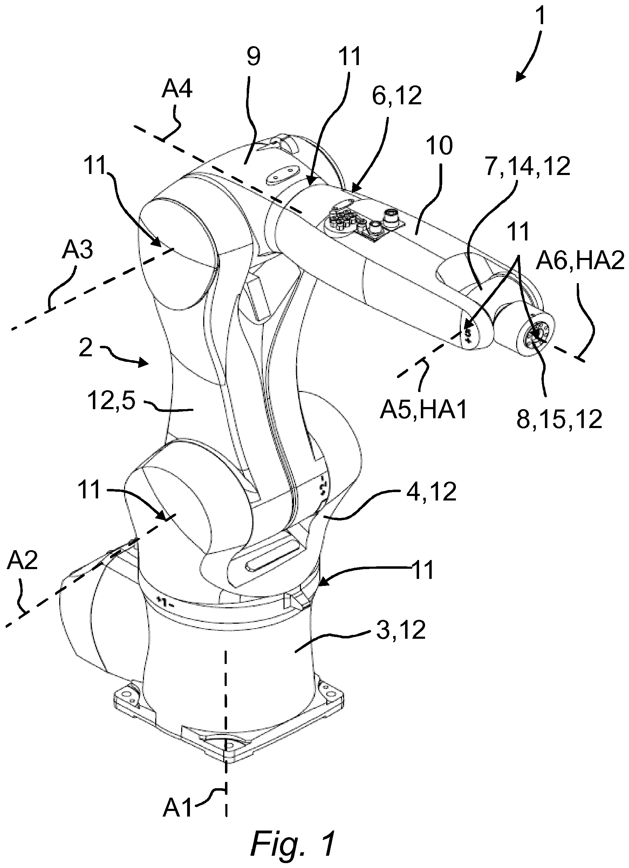

Die Fig. 1 zeigt einen Industrieroboter 1, der einen Roboterarm 2 aufweist. Der Roboterarm 2 umfasst im Falle des vorliegenden Ausführungsbeispiels mehrere, nacheinander angeordnete und mittels Gelenke 11 verbundene Glieder 12. Bei den Gliedern 12 handelt es sich insbesondere um ein Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Armausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6.

Der Armausleger 6 weist im Falle des vorliegenden Ausführungsbeispiels ein schwenkbar an der Schwinge 5 gelagertes erstes Gehäusebauteil 9 auf. An dem ersten Gehäusebauteil 9 eines ersten Gliedes 12 ist ein zweites Gehäusebauteil 10 eines zweiten Gliedes 12 des Armauslegers 6 um die Achse A4 drehbar gelagert.

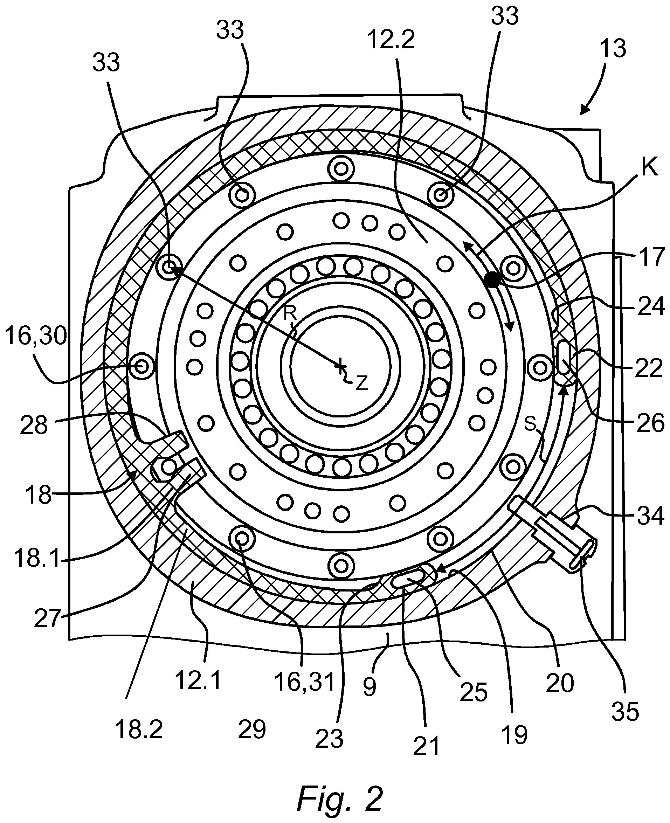

Der maximale Drehverstellwinkel wird durch eine mechanische Anschlagsvorrichtung 13 begrenzt. Die mechanische Anschlagsvorrichtung 13 ist in Fig. 2 in einer Querschnittsansicht näher dargestellt. Die Anschlagsvorrichtung 13 umfasst eine mit dem einen Glied 12.1 der beiden benachbarten Glieder 12.1, 12.2 verbundene Anschlagsvorsprung 16, einen mit dem anderen Glied 12.2 der beiden benachbarten Glieder 12.1, 12.2 verbundenen Mitnehmer 17 und einen von dem Mitnehmer 17 verstellbaren Schleppanschlag 18, der einen Schleppanschlagkörper 18.1 und einen mit dem Schleppanschlagkörper 18.1 verbundenen Ringkörper 18.2 aufweist, welcher zumindest teilweise oder vollständig in eine Ringnut 19 in einer Innenwand 20 eines Gehäusebauteils 9, 10 des einen Gliedes 12.1 der beiden benachbarten Glieder 12.1, 12.2 drehbar eingesetzt ist.

Der Ringkörper 18.2 wird im Falle des vorliegenden Ausführungsbeispiels durch einen federelastischen offenen Ringbogen gebildet wird, der zwei gegenüberliegende Ringbogenenden 21, 22 aufweist und der ausgebildet ist, durch ein federelastisch vorspannendes Aufeinanderzubewegen der Ringbogenenden 21, 22 in seinem Außendurchmesser derart verkleinert zu werden, dass der Ringkörper 18. 2 in die Ringnut 19 des Gehäusebauteils 9, 10 einsetzbar und/oder entnehmbar ist und in einem federelastisch zumindest teilweise oder vollständig entspanntem Zustand der Ringkörper 18.2 in der Ringnut 19 des Gehäusebauteils 9, 10 axial fixiert und in Umfangsrichtung drehbar geführt ist.

Die beiden Ringbogenenden 21, 22 weisen jeweils einen Vorsprung 23, 24 oder ein Auge 25, 26 auf, das ausgebildet ist, jeweils eine manuelle Greifwerkzeugspitze eines zum Aufeinanderzubewegen der Ringbogenenden 21, 22 ausgebildeten Greifwerkzeugs aufzunehmen.

Der Schleppanschlagkörper 18.1 wird von einer sich vom Ringkörper 18.2 radial nach innen erstreckenden Lasche 27, insbesondere einer einteilig mit dem Ringkörper 18.2 ausgebildeten Lasche 27 gebildet. Der Schleppanschlagkörper 18.1 weist dabei zwei gegenüberliegende Anschlagflächen 28, 29 auf, welche jeweils je nach Anschlaglage an einem von zwei Gegenanschlagsflächen der Anschlagsvorsprünge 16 in der jeweiligen maximalen Drehwinkellage des Gelenks 11 anstehen. Aus der Abstimmung der Breite der Lasche 27 bzw. des Abstands von Stegen 27.1 und 27.2 voneinander an dem Schleppanschlagkörper 18.1 und dem Winkel zwischen zweier Vorsprünge 30, 31, beispielsweise zweier Schrauben, Bolzen oder Zapfen der Anschlagsvorsprünge 16 ergibt sich der zu begrenzende Winkelbereich des Schleppanschlags 18.

Die Lasche 27 wird im dargestellten Ausführungsbeispiel also von zwei voneinander sich radial ersteckenden Stegen 27.1, 27.2 gebildet, die eine in der Lasche 27 ausgebildete Ausnehmung 32 begrenzen.

Jeder Steg 27.1, 27.2 weist einen im Querschnitt gegenüber einem radial auskragenden Stegabschnitt des Stegs 27.1, 27.2 verkleinerten Basisabschnitt des Stegs 27.1, 27.2 auf, der ausgebildet ist, den radial auskragenden Stegabschnitt federelastisch an dem Ringkörper 18. 2 anzubinden.

Der Anschlagsvorsprung 16 wird im vorliegenden Ausführungsbeispiel der Fig. 2 von zwei in einem Winkel und insbesondere auf demselben radialen Abstand R vom Drehzentrum Z des Gelenks 11 angeordneten Vorsprüngen 30, 31 , insbesondere Bolzen oder Zapfen gebildet, zwischen denen der Schleppanschlagkörper 18.1 in seiner in die Ringnut 19 des Gehäusebauteils 9, 10 eingesetzten Lagerungsposition um den Winkel, insbesondere einem Winkel von 40 bis 80 Winkelgrad, insbesondere 60 Winkelgrad drehbeweglich ist. Es können zwei oder mehrere Aufnahmen 33, insbesondere Bohrungen oder Gewindebohrungen in dem Gehäusebauteil 9, 10 vorgesehen sein, wobei in jede Aufnahmen 33 bzw. Bohrung oder Gewindebohrung ein Vorsprung 30, 31, Bolzen oder Zapfen lösbar einsetzbar ist.

Dabei kann durch Herausnehmen bzw. Herausschrauben einer oder mehrerer der Vorsprünge 30, 31, Bolzen oder Zapfen die Winkelspanne, innerhalb welcher der Schleppanschlag 18, insbesondere der Schleppanschlagkörper 18.1 drehbeweglich ist, verändert werden. Es können auch beispielsweise nur zwei Vorsprünge 30, 31 , Bolzen oder Zapfen vorgesehen sein, die wahlweise in zwei von mehreren, insbesondere gleichmäßig über einen Umfang verteilt angeordneten Aufnahmen 33, insbesondere Bohrungen oder Gewindebohrungen eingesetzt und wieder entnommen werden können, um die Winkelspanne je nach gewünschtem maximalen Drehverstellwinkel entsprechend zu verändern.

In dem Gehäusebauteil 9, 10 des einen der beiden benachbarten Glieder 12 ist im Ausführungsbeispiel eine Aufnahmebohrung 34 für einen radial in das Innere des Gehäusebauteils 9, 10 hineinragenden Justageaufnehmer 35 eingebracht ist und der Ringkörper 18.2 des Schleppanschlags 18 derart in die Ringnut 19 des Gehäusebauteils 9, 10 eingesetzt ist, dass in jeder Drehlage des Schleppanschlags 18, insbesondere des Ringkörpers 18.2 die Aufnahmebohrung 34 bzw. der Justageaufnehmer 35 in dem vom Ringbogen offenen Sektor S des Ringkörpers 18.2 zwischen den beiden Ringbogenenden 21, 22 liegt. Die Aufnahmebohrung 34 für den radial in das Innere des Gehäusebauteils 9, 10 hineinragenden Justageaufnehmer 35 kann also dort gesetzt werden, wo die Innenwand 20 des Gehäusebauteils 9, 10 gerade nicht von dem Ringkörper 18.2 belegt wird, und zwar in jeder der vom Ringkörper 18.2 durch die Anschlagsvorrichtung 13 festgelegten einnehmbaren Drehlagen. Eine solche Öffnung des Anschlags dient in einer solchen Ausführungsform als Freimachung für den Justageaufnehmer 35, insbesondere einer Justagepatrone, die in das Gehäusebauteils 9, 10 hineinragt. Diese wird an die Bewegung der Überfahrsicherung zwischen den Schrauben angepasst, um sicher zu stellen, dass im Betrieb der Justageaufnehmer 35 nicht beschädigt wird.

Der Mitnehmer 17 wird im dargestellten Ausführungsbeispiel von einem Vorsprung, insbesondere Schraube, Bolzen oder Zapfen gebildet, der in Abhängigkeit der Drehrichtung des anderen der beiden benachbarten Glieder 12 entweder an der einen Seite des verstellbaren Schleppanschlags 18, insbesondere an dem einen Steg 27.1 oder an der anderen Seite des verstellbaren Schleppanschlags 18, insbesondere an dem anderen Steg 27.2 anzuschlagen vermag, um den Schleppanschlag 18 in der Ringnut 19 des Gehäusebauteils 9, 10 zu verdrehen.

Bei einer Drehung des betreffenden Gliedes 12 fährt der Mitnehmer 17 also zunächst frei auf einer Kreisbahn K um die Drehachse des Gliedes 12 drehend um, bis der Mitnehmer 17 an dem Schleppanschlag 18 bzw. an dem Schleppanschlagskörper 18.1 bzw. an einer der Anschlagsflächen 28, 29 ansteht, den Schleppanschlagskörper 18.1 dann um die Winkelspanne, innerhalb welcher der Schleppanschlag 18, insbesondere der Schleppanschlagkörper 18.1 drehbeweglich ist, vor sich herschiebt, bis er, d.h. einer der Stege 27.1, 27.2 an dem Anschlagsvorsprung 16 bzw. an einer der Vorsprünge 30, 31 fest ansteht, wenn der maximale Drehverstellwinkel des Gelenks 11 erreicht ist.

## Patentansprüche

1. Industrieroboter, aufweisend
einen Roboterarm (2), der mehrere über Gelenke (11) verbundene Glieder (12) aufweist, von denen wenigstens zwei benachbarte Glieder (12) durch jeweils ein Gelenk (11) verbunden sind, das als Drehgelenk ausgebildet, mittels eines Antriebs verstellbar und in seinem maximalen Drehverstellwinkel durch eine mechanische Anschlagsvorrichtung (13) begrenzt ist, die einen mit dem einen (12.1) der beiden benachbarten Glieder (12.1, 12.2) verbundenen Anschlagsvorsprung (16), einen mit dem anderen (12.2) der beiden benachbarten Glieder (12.1, 12.2) verbundenen Mitnehmer (17) und einen von dem Mitnehmer (17) verstellbaren Schleppanschlag (18) umfasst, der einen Schleppanschlagkörper (18.1) und einen mit dem Schleppanschlagkörper (18.1) verbundenen Ringkörper (18.2) aufweist, welcher in eine Ringnut (19) in einer Innenwand (20) eines Gehäusebauteils (9, 10) des einen (12.1) der beiden benachbarten Glieder (12.1, 12.2) drehbar eingesetzt ist.

2. Industrieroboter nach Anspruch 1, bei dem der Ringkörper (18.2) durch einen federelastischen offenen Ringbogen gebildet wird, der zwei gegenüberliegende Ringbogenenden (21, 22) aufweist und der ausgebildet ist, durch ein federelastisch vorspannendes Aufeinanderzubewegen der Ringbogenenden (21, 22) in seinem Außendurchmesser derart verkleinert zu werden, dass der Ringkörper (18.2) in die Ringnut (19) des Gehäusebauteils (9, 10) einsetzbar und/oder entnehmbar ist und in einem federelastisch zumindest teilweise oder vollständig entspanntem Zustand der Ringkörper (18.2) in der Ringnut (19) des Gehäusebauteils (9, 10) axial fixiert und in Umfangsrichtung drehbar geführt ist.

3. Industrieroboter nach Anspruch 2, bei dem die beiden Ringbogenenden (21, 22) jeweils einen Vorsprung (23, 24) oder ein Auge (25, 26) aufweisen, das ausgebildet ist, jeweils eine manuelle Greifwerkzeugspitze eines zum Aufeinanderzubewegen der Ringbogenenden (21, 22) ausgebildeten Greifwerkzeugs aufzunehmen.

4. Industrieroboter nach einem der Ansprüche 1 bis 3, bei dem der Schleppanschlagkörper (18.1) von einer sich vom Ringkörper (18.2) radial nach innen erstreckenden Lasche (27), insbesondere einer einteilig mit dem Ringkörper (18.2) ausgebildeten Lasche (27) gebildet wird.

5. Industrieroboter nach Anspruch 4, bei dem die Lasche (27) zwei voneinander sich radial ersteckende Stege (27.1, 27.2) aufweist, die eine in der Lasche (27) ausgebildete Ausnehmung (32) begrenzen.

6. Industrieroboter nach Anspruch 5, bei dem jeder Steg (27.1, 27.2) einen im Querschnitt gegenüber einem radial auskragenden Stegabschnitt des Stegs (27) verkleinerten Basisabschnitt des Stegs (27) aufweist, der ausgebildet ist, den radial auskragenden Stegabschnitt federelastisch an dem Ringkörper (18.2) anzubinden.

7. Industrieroboter nach einem der Ansprüche 1 bis 6, bei dem der Anschlagsvorsprung (16) von zwei in einem Winkel und insbesondere auf demselben radialen Abstand (R) vom Drehzentrum (Z) des Gelenks (11) angeordneten Vorsprüngen (30, 31), insbesondere Stiften, Bolzen oder Zapfen gebildet wird, zwischen denen der Schleppanschlagkörper (18.1) in seiner in die Ringnut (19) des Gehäusebauteils (9, 10) eingesetzten Lagerungsposition um den Winkel, insbesondere einem Winkel von 40 bis 80 Winkelgrad, insbesondere 60 Winkelgrad drehbeweglich ist.

8. Industrieroboter nach Anspruch 7, bei dem in dem Gehäusebauteil (9, 10) des einen der beiden benachbarten Glieder (12.1, 21.2) eine Aufnahmebohrung (34) für einen radial in das Innere des Gehäusebauteils (9, 10) hineinragenden Justageaufnehmer (35) eingebracht ist und der Ringkörper (18.2) des Schleppanschlags (18) derart in die Ringnut (19) des Gehäusebauteils (9, 10) eingesetzt ist, dass in jeder Drehlage des Schleppanschlags (18), insbesondere des Ringkörpers (18.2) die Aufnahmebohrung (34) bzw. der Justageaufnehmer (35) in dem vom Ringbogen offenen Sektor des Ringkörpers (18.2) zwischen den beiden Ringbogenenden (21, 22) liegt.

9. Industrieroboter nach einem der Ansprüche 1 bis 8, bei dem der Mitnehmer (17) von einem Vorsprung, insbesondere Schraube, Bolzen oder Zapfen gebildet wird, der in Abhängigkeit der Drehrichtung des anderen der beiden benachbarten Glieder (12.1, 12.2) entweder an der einen Seite des verstellbaren Schleppanschlags (18), insbesondere an dem einen Steg (27.1) oder an der anderen Seite des verstellbaren Schleppanschlags (18), insbesondere an dem anderen Steg (27.2) anzuschlagen vermag, um den Schleppanschlag (18) in der Ringnut (19) des Gehäusebauteils (9, 10) zu verdrehen.

10. Industrieroboter nach einem der Ansprüche 1 bis 9, bei dem der Schleppanschlag (18), insbesondere der Ringkörper (18.2) in Art eines Sicherungsringes, insbesondere in Art eines Sicherungsringes gemäß DIN 472 ausgeführt ist.

## Claims

1. Industrial robot, comprising
a robot arm (2) having multiple links (12) that are connected by means of joints (11), in which at least two adjacent links (12) respectively are connected by means of a joint (11), which is designed as a swivel joint, can be adjusted by means of a drive and is delimited in its maximum rotatable adjustment angle by means of a mechanical stop device (13), which comprises a stop projection (16) which is connected to one (12.1) of the two adjacent links (12.1, 12.2), an engaging piece (17) which is connected to the other of the two adjacent links (12.1, 12.2) and a drag stop (18) which can be adjusted by the engaging piece (17), which drag stop comprises a drag stop body (18.1) and an annular body (18.2) connected to the drag stop body (18.1) which is pivoted in an annular groove (19) in an inner wall (20) of a housing component (9, 10) of one (12.1) of the two adjacent links (12.1, 12.2).

2. Industrial robot according to claim 1, wherein the annular body (18.2) is formed by a spring-elastic open circular arc, which comprises two opposite circular arc ends (21, 22) and which is designed to have its external diameter minimised in that the ends of the circular arc (21, 22) are moving resiliently toward one another in such a way that the annular body (18.2) can be inserted into and/or removed from the annular groove (19) of the housing component (9, 10), and to be axially fixed in the annular groove (19) of the housing component (9, 10) and pivoted in peripheral direction when the annular body resiliently reaches at least partially or completely a relaxed condition.

3. Industrial robot according to claim 2, wherein each of the two ends of the circular arc (21, 22) comprises a projection (23, 24) or an eye (25, 26) which is designed to accept, respectively, a manual tip of a gripping device designed in such a way that the ends of the circular arc (21, 22) are moving toward one another.

4. Industrial robot according to any of claims 1 to 3, wherein the drag stop body (18.1) is formed by a tab (27) extending radially inward from an annular body (18.2), specifically by a tab (27) designed in one piece with the annular body (18.2).

5. Industrial robot according to claim 4, wherein the tab (27) comprises two crosspieces (27.1, 27.2) extending radially from one another which define a recess (32) formed in the tab (27).

6. Industrial robot according to claim 5, wherein each crosspiece (27.1, 27.2) comprises a base portion of the crosspiece (27) which is minimised in cross-section compared to a radially protruding portion of the crosspiece (27), which base portion is designed to resiliently attach the radially protruding crosspiece portion to the annular body (18.2).

7. Industrial robot according to any of claims 1 to 6, wherein the stop projection (16) is formed by two projections (30, 31), particularly screws, bolts or pins, arranged at an angle and especially at the same radial distance (R) from the rotation centre (Z) of the joint (11), between which projections the drag stop body (18.1) is rotatable in its mounted position inserted into the annular groove (19) of the housing component (9, 10) about the angle, specifically an angle of between 40 and 80 degrees, in particular 60 degrees.

8. Industrial robot according to claim 7, wherein in the housing component (9, 10) of one of the two adjacent links (12.1, 21.2) a receiving hole (34) has been formed for an adjustment sensor (35) protruding radially into the interior of the housing component (9, 10), and the annular body (18.2) of the drag stop (18) is inserted into the annular groove (19) of the housing component (9, 10) in such a way that in each rotary position of the drag stop (18), particularly the annular body (18.2), the receiving hole (34) or adjustment sensor (35) is positioned in the section of the annular body (18.2) that is open toward the circular arc and located between the two ends of the circular arc (21, 22).

9. Industrial robot according to any of claims 1 to 8, wherein the engaging piece (17) is formed by a projection, specifically a screw, bolt or pin, which, depending on the rotational direction of the other one of the two adjacent links (12.1, 12.2), is either able to strike on one side of the adjustable drag stop (18), specifically on a crosspiece (27.1) or on the other side of the adjustable drag stop (18), specifically on the other crosspiece (27.2), in order to rotate the drag stop (18) in the annular groove (19) of the housing component (9, 10).

10. Industrial robot according to any of claims 1 to 9, wherein the drag stop (18), specifically the annular body (18.2), is designed in the form of a retaining ring, in particular as a type of retaining ring according to DIN 472.

## Revendications

1. Robot industriel, présentant un bras de robot (2) qui présente plusieurs membres (12) reliés par des articulations (11), dont au moins deux membres (12) voisins sont reliés chacun par une articulation (11) qui est réalisée comme articulation à pivot, qui est réglable au moyen d'un entraînement et limité dans son angle maximal de rotation par un dispositif à butée mécanique (13) qui comprend une saillie de butée (16) reliée à l'un (12.1) des deux membres (12.1, 12) voisins, un élément d'entraînement (17) qui est relié à l'autre (12.2) des deux éléments (12.1, 12.2) voisins et une butée d'entraînement (18) qui peut être réglée par l'élément d'entraînement (17) et qui comprend un corps de butée d'entraînement (18.1) et un corps annulaire (18.2) relié au corps de butée d'entraînement (18.1), qui est inséré de manière rotative dans une rainure annulaire (19) dans une paroi intérieure (20) d'un élément de boîtier (9, 10) d'un (12.1) des deux éléments voisins (12.1, 12.2).

2. Robot industriel selon la revendication 1, dans lequel le corps annulaire (18.2) est formé par un arc annulaire ouvert élastique à la manière d'un ressort qui présente deux extrémités d'arc annulaire opposées (21, 22) et qui est conçu pour être réduit dans son diamètre extérieur par sollicitation élastique des extrémités d'arc annulaire (21, 22) l'une vers l'autre de telle sorte que le corps annulaire (18.2) peut être inséré dans la rainure annulaire (19) de l'élément de boîtier (9, 10) et/ou retiré de celle-ci, et, à l'état détendu au moins partiellement ou totalement par élasticité de ressort, le corps annulaire (18.2) est fixé axialement dans la rainure annulaire (19) de l'élément de boîtier (9, 10) et guidé en rotation en direction périphérique.

3. Robot industriel selon la revendication 2, dans lequel les deux extrémités d'arc annulaire (21, 22) présentent chacune une saillie (23, 24) ou un oeil (25, 26) destiné(e) à recevoir respectivement une pointe d'outil de préhension manuelle d'un outil de préhension destiné à déplacer les extrémités d'arc annulaire (21, 22) l'une vers l'autre.

4. Robot industriel selon l'une des revendications 1 à 3, dans lequel le corps de butée (18.1) est formé par une patte (27) s'étendant radialement vers l'intérieur à partir du corps annulaire (18.2), en particulier une patte (27) formée d'un seul tenant avec le corps annulaire (18.2).

5. Robot industriel selon la revendication 4, dans lequel la patte (27) présente deux entretoises (27.1, 27.2) qui s'étendent radialement l'une de l'autre et délimitent un évidement (32) formé dans la patte (27).

6. Robot industriel selon la revendication 5, dans lequel chaque entretoise (27.1, 27.2) présente un tronçon de base de l'entretoise (27) ayant une section transversale réduite par rapport à un tronçon d'entretoise (27) en saillie radiale, qui est réalisé pour relier de manière élastique à la manière d'un ressort le tronçon d'entretoise (27) en saillie radiale avec le corps annulaire (18.2).

7. Robot industriel selon l'une des revendications 1 à 6, dans lequel la saillie de butée (16) est formée par deux saillies (30, 31), en particulier des broches, des boulons ou des goujons, agencées sous un angle et en particulier à la même distance radiale (R) du centre de rotation (Z) de l'articulation (11), entre lesquelles le corps de butée d'entraînement (18.1) dans sa position d'appui insérée dans la rainure annulaire (19) de l'élément de boîtier (9, 10), peut tourner autour de l'angle, en particulier d'un angle de 40 à 80 degrés d'angle, en particulier de 60 degrés d'angle.

8. Robot industriel selon la revendication 7, dans lequel un alésage de réception (34) pour un capteur de réglage (35) faisant saillie radialement à l'intérieur de l'élément de boîtier (9, 10) est prévu dans l'élément de boîtier (9, 10) de l'un des deux éléments voisins (12.1, 21.2), et le corps annulaire (18.2) de la butée d'entraînement (18) est inséré dans la rainure annulaire (19) de l'élément de boîtier (9, 10) de telle sorte que, dans chaque position de rotation de la butée d'entraînement (18), en particulier du corps annulaire (18.2), l'alésage de réception (34) ou le capteur de réglage (35) se trouve dans le secteur du corps annulaire (18.2) qui est ouvert par l'arc annulaire entre les deux extrémités (21, 22) d'arc annulaire.

9. Robot industriel selon l'une des revendications 1 à 8, dans lequel l'entraîneur (17) est formé par une saillie, en particulier par une vis, un boulon ou un goujon qui, en fonction du sens de rotation de l'autre des deux éléments voisins (12.1, 12).2) est en mesure de venir en butée soit sur un côté de la butée d'entraînement réglable (18), en particulier sur ladite une entretoise (27.1), soit sur l'autre côté de la butée d'entraînement réglable (18), en particulier sur l'autre entretoise (27.2), pour faire tourner la butée d'entraînement (18) dans la rainure annulaire (19) de l'élément de boîtier (9, 10).

10. Robot industriel selon l'une des revendications 1 à 9, dans lequel la butée d'entraînement (18), en particulier le corps annulaire (18.2), est réalisé(e) à la manière d'un circlip, en particulier d'un circlip selon DIN 472.
